# EUROPEAN PATENT APPLICATION

(11) **EP 4 046 500 A1**
(43) Date of publication of application: **24.08.2022**
(21) Application number: 20811698.8
(22) Date of filing: 19.10.2020
(51) Int. Cl.: A23N 1/00, A23N 1/02, A47J 19/02

(54) **SWEEPER AND FILTER ASSEMBLY FOR JUICERS AND JUICER INCORPORATING SAME**

(30) Priority: 18.10.2019 ES 201930926
(71) Applicant: Zumex Group S.A., 46113 Moncada (ES)
(72) Inventor: GONZÁLEZ, Fernando, 46113 Moncada (ES)
(74) Representative: Elzaburu S.L.P.
(86) International application number: PCT/ES2020/070636
(87) International publication number: WO 2021/074477

(57) **Abstract**

Sweeper and filter assembly and juicer incorporating same The sweeper and filter assembly comprises a casing open on the top, with a first lower outlet orifice for the juice and a second lower outlet orifice for fruit remains, such that the casing contains a filter inside it and also comprises:
- at least one worm gear with a shaft that is arranged longitudinally on the filter, such that one of the ends of the shaft protrudes out of the casing, and
- a drive means connected by a mechanical coupling to the protruding end of the shaft of the worm gear.

## Description

### Field of the invention

The present invention relates to a sweeper and filter assembly mainly for application in fruit juicers to remove the pulp and remains of the juiced fruit (such as seeds), filtering the juice obtained. It also relates to a juicer incorporating said sweeper and filter assembly.

### Background of invention

Juicers commonly use filters with cleaning systems to prevent potential blockage thereof with the pulp or other fruit remains.

Spanish utility model ES 1045339 U, relating to an "Improved device for fruit juice vending machines", describes a device where, with respect to a transverse direction of its upper face, the longitudinal edge of a ruler is applied, the length of which reaches the length in the transverse direction of the filtering floor, the transverse ruler being installed on a support fixed to a worm gear driven by a traction pulley that engages the output shaft of a geared motor, said shaft being oriented parallel to said transverse ruler, where the limits of said support are located in correspondence with the ends of said filtering floor along the direction perpendicular to said transverse ruler, and where the geared motor is driven by an electricelectronic programmable control device.

Spanish patent ES 2545235 B1, relating to a "Fruit juicer", discloses a machine with an automated fruit feeder and cutting and juicing means comprising a pair of rotary assemblies with three fruit-receiving cups and a blade cutting assembly, and means for extracting the peel after juicing, as well as a pair of juicing spheres under the cup assemblies. In addition, the machine presents a collection tray for the juice with a fixed filter for collecting the pulp and seeds, and means for collecting the peel. The machine also comprises a filter cleaning assembly for cleaning the fixed filter of the juice collection tray, which in turn comprises a mobile scraper mounted between to end shafts that are assembled on the fixed filter, which in its motion along the entire length of the fixed filter carries the pulp and seeds to a drain of the juice collection tray.

Spanish patent ES 2609830 B1, relating to a "Sweeper and filter assembly for beverage making machines" describes an assembly that comprises a frame associated with a filter, the sweeper comprising a carrier strip mounted on at least two shafts. The carrier strip can perform the filtering functions itself, as it can be made from filtering material or present suitable orifices. The carrier strip is flexible and preferably elastic. The shafts on which it is mounted rest on a casing such that at least one engages a drive element comprising a motor and an electronic device for managing the motor. At least one scraper attached to the casing is provided to clean the carrier band. The motor of the drive element is independent from the motor of the juicer, the device having sweeping and filtering cycles that are independent from the juicing cycles of the main machine.

These systems of the prior art allow cleaning the filters, but have the drawback of requiring significant space as they require elements such as carrier strips or bands. This is a critical factor, for example, in automated tabletop juicers.

### Summary of the invention

The aim of the present invention is thus to provide a sweeper and filter assembly with a more compact design that is an alternative to existing devices.

The invention provides a sweeper and filter assembly for juicers that comprises a casing open on the top, with a first lower outlet orifice for the juice and a second lower outlet orifice for fruit remains, such that the casing contains a filter inside it and also comprises:
- a worm gear with a shaft that is arranged longitudinally on the filter, such that one of the ends of the shaft protrudes out of the casing, and
- a geared motor coupled mechanically to the protruding end of the worm gear shaft.

The invention also provides a juicer comprising a juicing assembly with at least one female drum and at least one male drum, which rotate in a synchronised manner in opposite directions to each other, each female drum having on its side at least one receptacle for housing the fruit to juice, and each male drum having on its side at least one protrusion that can fit snugly in the corresponding receptacle of the female drum in each rotation, compressing and juicing the fruit, the at least one male drum having a shared rotation shaft and each female drum having its own rotation shaft, such that the rotation shaft of the at least one male drum and the shaft or shafts of each female drum intersect in space, and comprises on its lower part a sweeper and filter assembly of the invention, and where the shaft of the at least one male drum is coupled to a geared motor by a mechanical coupling and an intermediate gear train.

This configuration of the sweeper and filter assembly avoids some of the elements present in some devices of the prior art, such as the scrapers (fixed or mobile) or the carrier strips or bands used specifically for them.

Another advantage of the invention is that it allows a simpler maintenance and cleaning by simplifying its assembly and disassembly.

A further advantage of the invention is that the presence of the worm gear allows a more efficient removal of the pulp and other remains of the juiced fruit.

Other advantageous embodiments of the invention are outlined in the dependant claims.

### Brief description of the drawings

A non-limiting example of the object of the invention is shown below, with reference to the accompanying drawings wherein:
Figure 1 shows a perspective view of a sweeper and filter assembly of the present invention.
Figure 2 shows a view of the coupling between the shaft of the sweeper and filter assembly and a geared motor, and between the shaft of the male drums and a geared motor. Figure 3 shows the couplings isolated.
Figure 4 shows a geared motor for the shafts of the male drums of the juicer, with the gear train.
Figure 5 shows a view of a juicer with the juicing head and the sweeper and filter assembly placed under same.

### Detailed description of the invention

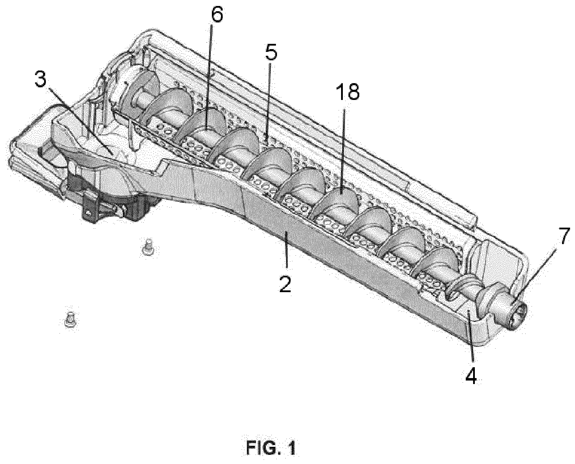

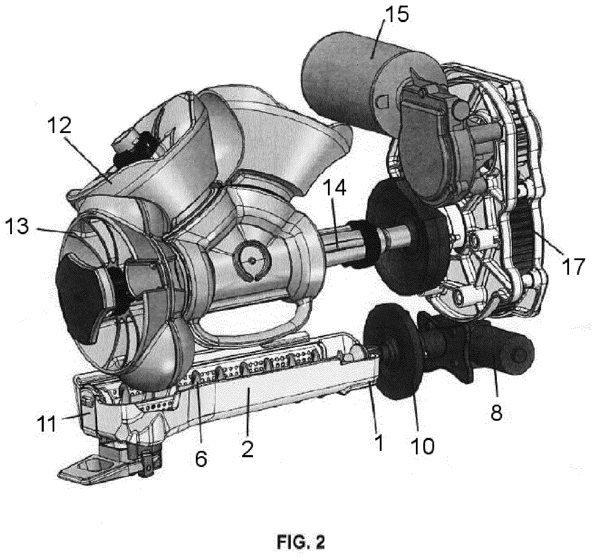

Figures 1 and 2 shows the sweeper and filter assembly 1 for juicers of the invention. The assembly 1 has a configuration with a casing 2 open on the top thereof to allow entry of the juicer juice into the juicing assembly or group of the machine, in which a first lower outlet orifice 3 is made for the juice and a second outlet orifice 4 is made for the remains of fruit, such as pulp, seeds, etc.

Conventionally it will be understood that the front part is that where the juice exits (where the outlet spigot of the juicer is placed) and the rear part is the part opposite thereto. The assembly also includes a filter 5 inside the casing 2 and surrounded by same.

Therefore, the first lower outlet orifice 3 for the juice is on the front part and the second outlet orifice 4 for the fruit remains is on the rear part.

The assembly 1 also includes a worm gear 6 with a shaft placed longitudinally on the filter 5, from the front part to the rear part, such that one of the ends of the shaft is a protruding end 7 that protrudes out of the rear part of the casing 2. It also includes a drive means 8 connected by a mechanical coupling 9 to the protruding end 7 of the shaft of the worm gear 6. The drive means 8 transmits a rotational motion to the shaft of the worm gear 6 and can consist, for example, in a geared motor.

When the drive means 8 is actuated, as it is coupled to the shaft of the worm gear 6, the worm gear 6 will rotate, allowing to displace the fruit remains (such as pulp and seeds) towards the rear, until they are placed above the second outlet orifice 4 for the fruit remains and fall under gravity into a waste container located beneath. In this way the filter 5 (through which the previously obtained juice passes) will be free from most of the fruit remains that have fallen, and will remain free of obstructions and plugging for a longer time. The juice passes through the orifices of the filter 5 and moves along the base of the casing 2 towards the first lower outlet orifice 3 for the juice, placed in an area located under the base of the rest of the casing 2. Preferably, the base of the casing 2 is inclined in a downward sense from the area of the first lower outlet orifice 3 for the juice.

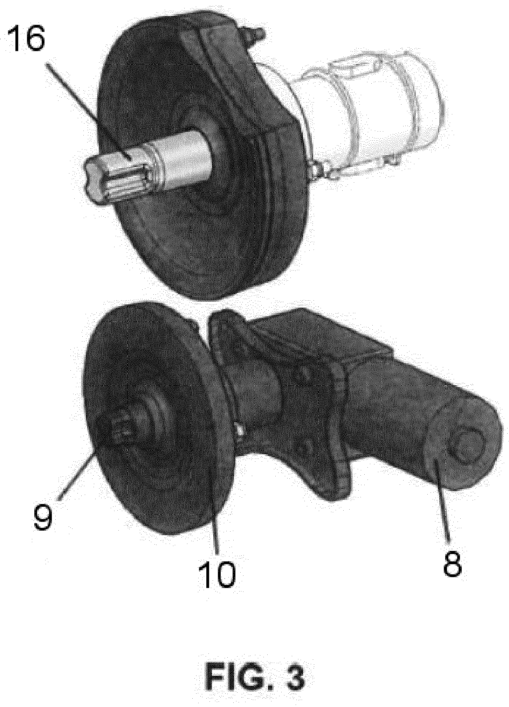

Figure 3 shows that the mechanical coupling 9 can be a male coupling in the form of a shaft with a figure-eight end, that can be coupled in a corresponding figure-eight shaped female recess of the protruding end 7 of the shaft of the worm gear 6. Figures 2 and 3 show that the mechanical coupling 9 can comprise a disc 10 located above the shaft and coaxial with it, used to isolate the liquid to prevent part of the juice from reaching another area of the machine.

Figure 1 shows that the worm gear 6 can comprise a helical screw 18 located on the shaft. It also shows that the filter 5 can comprise a lower surface and two surfaces that curve upward therefrom, thereby increasing the filtering surface.

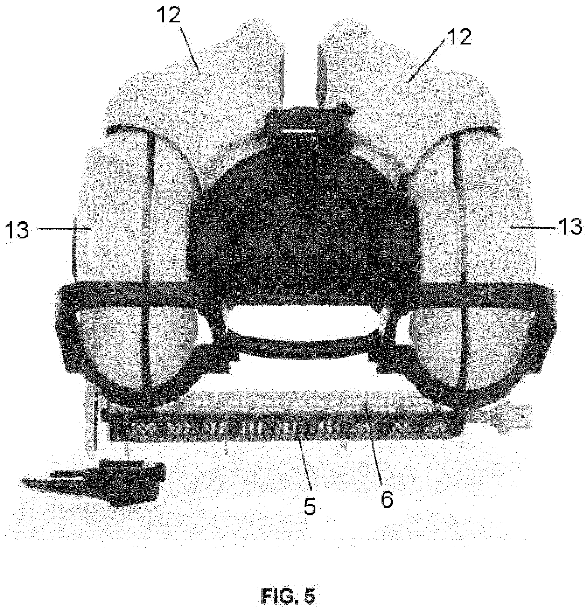

Figure 5 also shows an element located on the front part of the casing of the sweeper and filter assembly in the form of a lever 11, meant to act as a locking pin when the assembly 1 is mounted on the machine. Said element 11 also allows disassembly of the sweeper and filter assembly 1 as a block.

It is also possible to use the two worm gears 6 in parallel with their corresponding shafts placed longitudinally on the filter. This design allows increasing the pulp removal area and therefore allows removing remains of a larger size, such as peels.

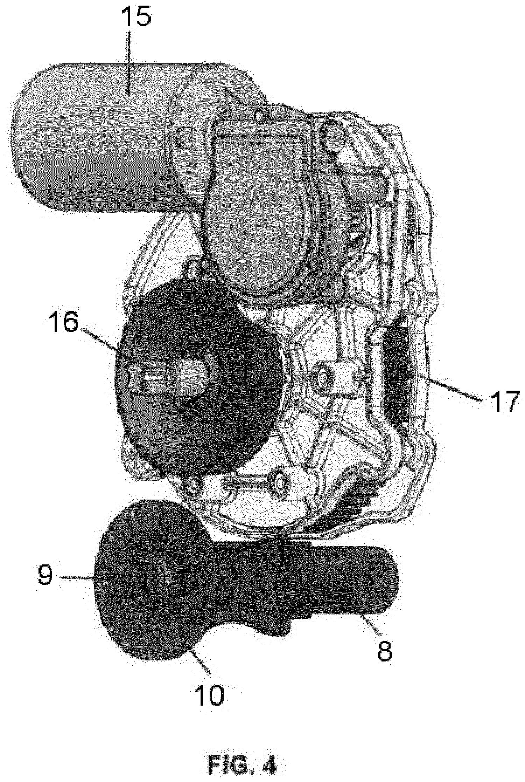

Figure 5 shows the main parts of the juicer incorporating the sweeper and filter assembly 1 (specifically the juicer assembly and the sweeper and filter assembly placed under the former). Other common parts in these machines (such as the juice outlet spigot, the outer casing or the waste container) have not been represented. The juicing assembly has at least one female drum 12 and at least one male drum 13 that rotate in a synchronised manner, each one in a direction opposite to the other, where each female drum 12 is provided on its side with at least one receptacle that can house the fruit to be juiced (in the embodiment shown, there are two female drums 12 and two male drums 13). Each male drum 13 is provided on its side with at least one protrusion that can fit snugly inside the receptacle of the corresponding female drum 12 in each rotation, squeezing and juicing the fruit, where the male drums 13 have a common rotation shaft 14, and each of the female drums 12 have their own rotation shaft such that the rotation shaft 14 of the male drums 13 and the shaft or shafts of each female drum 12 intersect in space. The juicer comprises on its lower part a sweeper and filter assembly 1 as those described above. In addition, the shaft 14 of the male drums 13 is coupled to a geared motor 15 by a mechanical coupling 16 and to an intermediate gear train 17 (see figure 4).

Using known control devices allows actuating the two geared motors (of the shaft 14 of the male drums 13 and of the shaft of the worm gear) simultaneously and stopping them at different times, as the two geared motors are independent. In this way the geared motor of the worm gear 6 can be made to stop later (for example, one minute after the geared motor of the shaft 14 of the male drums 13 stops), so that it can sweep the fruit remains deposited on the sweeper and filter assembly 1 in the preceding juicing operation.

Although some embodiments of the invention have been described and represented, it is clear that modifications may be introduced to them within the scope of the same, and that the invention should not be considered limited to these embodiments, but only to the content of the following claims.

## Claims

1. Sweeper and filter assembly (1) for juicers, comprising a casing (2) open on the top with a first lower outlet orifice (3) for the juice and a second lower outlet orifice (4) for fruit remains, such that the casing (2) contains a filter (5) inside it,
**characterised in that** it additionally comprises:
- at least one worm gear (6) with a shaft that is arranged longitudinally on the filter (5), such that one of the ends of the shaft is a protruding end (7) that protrudes out of the casing (2), and
- a drive means (8) connected by a mechanical coupling (9) to the protruding end (7) of the shaft of the worm gear (6).

2. Sweeper and filter assembly (1) for juicers, according to claim 1, wherein the worm gear (6) comprises a helical screw (18) placed on the shaft.

3. Sweeper and filter assembly (1) for juicers, according to any of the preceding claims, wherein the filter (5) comprises a lower surface and two surfaces that curve upward from same.

4. Sweeper and filter assembly (1) for juicers, according to any of the preceding claims, wherein the first lower outlet orifice (3) for the juice is placed in an area located under the base of the rest of the casing (2), and the base of the casing (2) is inclined towards said area.

5. Sweeper and filter assembly (1) for juicers, according to any of the preceding claims, wherein the second lower outlet orifice (4) for fruit remains is placed at the end of the casing (2) longitudinally opposite to the first lower outlet orifice (3) for the juice.

6. Sweeper and filter assembly (1) for juicers, according to any of the preceding claims, wherein the mechanical coupling (9) is a male coupling in the form of a shaft with a figure-eight end that is coupled to a corresponding figure-eight recess of the protruding end (7) of the worm gear (6).

7. Sweeper and filter assembly (1) for juicers, according to claim 6, wherein the mechanical coupling (9) comprises a disc (10) located on the shaft and coaxial with same.

8. Sweeper and filter assembly (1) for juicers, according to any of the preceding claims, comprising an element in the form of a lever (11) on the casing (2) at the end opposite to the protruding end (7) of the shaft of the worm gear (6).

9. Sweeper and filter assembly (1) for juicers, according to claim 1, comprising two worm gears (6) in parallel placed on the filter (5).

10. Juicer comprising a juicing assembly with at least one female drum (12) and at least one male drum (13), which rotate in a synchronised manner in opposite directions to each other, each female drum (12) having on its side at least one receptacle for housing the fruit to juice, and each male drum (13) having on its side at least one protrusion that can fit snugly in the corresponding receptacle of the female drum (12) in each rotation, compressing and juicing the fruit, the at least one male drum (13) having a shared rotation shaft (14) and each female drum (12) having its own rotation shaft, such that the rotation shaft of the at least one male drum (13) and the shaft or shafts of each female drum (12) intersect in space, **characterised in that** it comprises on its lower part a sweeper and filter assembly (1) of any of claims 1 to 8, and **in that** the shaft (14) of the at least one male drum (13) is coupled to a geared motor (15) by a mechanical coupling (16) and an intermediate gear train (17).

## Amended claims

### Amended claims under Art. 19.1 PCT

1. Juicer comprising a juicing assembly with at least one female drum (12) and at least one male drum (13), which rotate in a synchronised manner in opposite directions to each other, each female drum (12) having on its side at least one receptacle for housing the fruit to juice, and each male drum (13) having on its side at least one protrusion that can fit snugly in the corresponding receptacle of the female drum (12) in each rotation, compressing and juicing the fruit, the at least one male drum (13) having a shared rotation shaft (14) and each female drum (12) having its own rotation shaft, such that the rotation shaft of the at least one male drum (13) and the shaft or shafts of each female drum (12) intersect in space, **characterised in that** it comprises on its lower part a sweeper and filter assembly (1) comprising:
- a casing (2) open on the top with a first lower outlet orifice (3) for the juice and a second lower outlet orifice (4) for fruit remains, such that the casing (2) contains a filter (5) inside it,
- at least one worm gear (6) with a shaft that is arranged longitudinally on the filter (5), such that one of the ends of the shaft is a protruding end (7) that protrudes out of the casing (2), and
- a drive means (8) connected by a mechanical coupling (9) to the protruding end (7) of the shaft of the worm gear (6),
and **in that** the shaft (14) of the at least one male drum (13) is coupled to a geared motor (15) by a mechanical coupling (16) and an intermediate gear train (17).

2. Juicer, according to claim 1, wherein the worm gear (6) comprises a helical screw (18) placed on the shaft.

3. Juicer, according to any of the preceding claims, wherein the filter (5) comprises a lower surface and two surfaces that curve upward from same.

4. Juicer, according to any of the preceding claims, wherein the first lower outlet orifice (3) for the juice is placed in an area located under the base of the rest of the casing (2), and the base of the casing (2) is inclined towards said area.

5. Juicer, according to any of the preceding claims, wherein the second lower outlet orifice (4) for fruit remains is placed at the end of the casing (2) longitudinally opposite to the first lower outlet orifice (3) for the juice.

6. Juicer, according to any of the preceding claims, wherein the mechanical coupling (9) is a male coupling in the form of a shaft with a figure-eight end that is coupled to a corresponding figure-eight recess of the protruding end (7) of the worm gear (6).

7. Juicer, according to claim 6, wherein the mechanical coupling (9) comprises a disc (10) located on the shaft and coaxial with same.

8. Juicer, according to any of the preceding claims, comprising an element in the form of a lever (11) on the casing (2) at the end opposite to the protruding end (7) of the shaft of the worm gear (6).

9. Juicer, according to claim 1, comprising two worm gears (6) in parallel placed on the filter (5).

Statement under Art. 19.1 PCT
The new claim 1 meets the requirements of novelty, inventive step and industrial application.

None of the documents retrieved in the International Search Report anticipates all the characteristics of the new claim 1. None of said documents, alone or in combination with others, allows reaching the invention defined by the new claim 1. Furthermore, in the documents recovered there are no suggestions that direct the person skilled in the art towards said invention.
